(19) Europäisches Patentamt
European Patent Office
Office européen des brevets

(11) **EP 2 912 318 B1**

(12) **EUROPEAN PATENT SPECIFICATION**

(45) Date of publication and mention of the grant of the patent:
**13.04.2022 Bulletin 2022/15**

(21) Application number: **13774691.3**

(22) Date of filing: **14.10.2013**

(51) International Patent Classification (IPC):
**F04D 15/00** $^{(2006.01)}$     **F04D 29/10** $^{(2006.01)}$
**F04D 29/16** $^{(2006.01)}$

(52) Cooperative Patent Classification (CPC):
**F04D 1/06; F04D 15/0088; F04D 29/106; F04D 29/167; F16J 15/3292;** F05D 2240/59

(86) International application number:
**PCT/EP2013/071404**

(87) International publication number:
**WO 2014/060343 (24.04.2014 Gazette 2014/17)**

(54) **HIGH EFFICIENCY LOW SPECIFIC SPEED CENTRIFUGAL PUMP**

HOCHEFFIZIENTE KREISELPUMPE MIT GERINGER SPEZIFISCHER DREHZAHL

POMPE CENTRIFUGE À FAIBLE VITESSE SPÉCIFIQUE ET À HAUT RENDEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2012 IT FI20120210**

(43) Date of publication of application:
**02.09.2015 Bulletin 2015/36**

(73) Proprietor: **Nuovo Pignone Tecnologie - S.r.l.**
**50127 Florence (IT)**

(72) Inventor: **BERGAMINI, Lorenzo**
**I-50127 Florence (IT)**

(74) Representative: **Novagraaf Group**
**Chemin de l'Echo 3**
**1213 Onex (CH)**

(56) References cited:
EP-A1- 0 905 381     DE-A1-102006 028 806
DE-U1- 9 001 229     JP-A- 2003 021 096
US-A1- 2008 272 553     US-A1- 2011 135 454
US-A1- 2011 316 237

**Description**

FIELD OF THE INVENTION

The present disclosure concerns improvements to multi-stage centrifugal pumps. More specifically, the present disclosure relates to improvements aimed at increasing the efficiency of centrifugal pumps having a low specific speed.

DESCRIPTION OF THE RELATED ART

Multi-stage centrifugal pumps are widely used to boost the pressure of liquids. A multi-stage centrifugal pump usually comprises a casing and a shaft arranged for rotation in the casing. A plurality of impellers is keyed on the shaft and are rotatingly housed in respective chambers formed in the pump casing.

Inter-stage sealing rings and bushings are fit in the casing and co-act with the respective impellers to seal each side of each impeller, thus preventing the pressurized liquid delivered at the outlet of one impeller to flow back towards the upstream stage. The efficiency of the sealing rings and sealing bushings heavily influence the overall efficiency of the pump.

In general terms, given a certain pressure difference across the pump, between the pump inlet and the pump outlet, a higher number of stages results in more efficient inter-stage sealing, because a smaller pressure drop exists across each sealing ring or sealing bushing. This results in higher efficiency of the pump. Conversely, especially in cases of high-pressure, multi-stage centrifugal pumps, the reduction of the total number of stages leads to increased pressure drop across the inter-stage seals and consequently in increased liquid leakage.

The drop in overall pump efficiency is particularly relevant in case of low specific speed stages, i.e. in those pump stages or multi-stage pumps designed to process reduced flow rates with high head, i.e. high difference between outlet pressure and inlet pressure.

Brush seals have been suggested in centrifugal pumps in applications where the processed fluid contains solid particles or is a multi-phase fluid. Brush seals, however, have a limited sealing efficiency and have a limited pressure drop capability.

Further, JP 2003 021096 A discloses a low loss centrifugal pump that can reduce loss by disk abrasion and thus can suppress temperature increase of fluid at a low flow rate corresponding to a specific speed of about 100 (SI). To this end, this document teaches to provide floating disks non-contactly rotating between an impeller shroud and a casing at half a rotational speed of the impeller, whereby the loss by friction is halved.

Furthermore, US 2008/0272553 A1 discloses a turbine having a shaft seal which includes a plurality of compliant plate members secured to one of a static shell and a rotating shaft at their root in a facing relation. Further, US 2011/0135454 A1 discloses a leaf seal assembly for use with compressors, pumps or steam turbines including a plurality of staggered leaf seal members and a polymer member disposed on a high pressure side of the leaf seal in compliant contact with the leaf seal.

Still further, DE 10 2006 028 806 A1 describes a gap seal for a rotodynamic pump. The gap seal comprises a member mounted in the housing of the pump and having a plurality of recesses facing towards the gap.

DE9001229U discloses another prior art centrifugal pump.

There is still a need for more efficient inter-stage sealing arrangements, particularly in low specific speed stages of multi-stage centrifugal pumps.

SUMMARY OF THE INVENTION

The disclosure concerns an improved sealing arrangement capable of increasing efficiency of a multi-stage centrifugal pump comprising a casing, a rotary shaft arranged for rotation in said casing and a plurality of pump stages. Each pump stage comprises an impeller secured on the rotary shaft and arranged for rotation in a respective impeller chamber. A plurality of sealing members are further provided, for reducing leakage between a rotary component and a respective stationary component of the pump. At least one of the pump stages comprises an inlet-side sealing member arranged and configured for co-action with an impeller eye and comprising an arrangement of compliant plates or compliant plate members attached in facing relation at root ends to the respective stationary component and forming a sealing ring between the stationary component and the respective rotary component, and an outlet sealing member arranged and configured for coaction with an impeller hub and comprising an arrangement of compliant plate members. One or more of the pump stages are configured to have a specific speed defined as

$$Ns = (\omega \, q^{1/2})/(h^{3/4})$$

equal to or less than 25, where

ω is a pump shaft rotational speed expressed in rpm
q is a flow rate across the stage, expressed in m3/s at Best Efficiency Point (BEP)
h is a head rise across the stage expressed in m.

In some embodiments, each pump stage is configured to have a low specific speed, not higher than 25. In other embodiments, the pump can be comprised of N stages and N-1 stages are configured to have a specific speed equal to or less than 25. The first stage, i.e. the one nearer to the pump inlet or suction side can be different from the remaining stages and be configured to have a specific speed higher than 25.

In some embodiments, the specific speed of one or more, and preferably all except one, or all stages of the multistage pump can be equal to or less than 23, preferably equal to or less than 22 and even more preferably equal to or less than 20 for example equal to or less than 15.

In some embodiments, each stage of the pump comprises an inlet-side sealing member and an outlet-side sealing member. At least the inlet-side sealing member of at least one, some or all the stages are comprised of compliant plate members arranged in facing relation as described above. In particular, at least the inlet sealing member is comprised of compliant plate members. The inlet-side sealing member is arranged for co-action with an impeller eye of the respective impeller. The outlet-side sealing member is arranged for co-action with an impeller hub of the respective impeller. In further embodiments, some or all the outlet-side sealing members of the pump stages are comprised of compliant plate members.

In further embodiments, several sealing members comprising compliant plate members are used, between a stationary part or component of the casing and a portion of the rotary shaft or a portion of a component, such as a bushing or the like integrally rotating with the rotary shaft.

Additional sealing members formed by compliant plate members can be provided between an outermost pump stage and a shaft end containing the mechanical seals that isolates the pump from atmosphere.

In some embodiments, the pump can be provided with a balancing drum. One or more sealing members co-acting with the balancing drum can be provided. One or more said sealing members can be comprised of or formed by compliant plate members.

The compliant plate members advantageously have a flat configuration, with a cross section having a first dimension in axial direction and a second dimension in tangential direction (thickness of the plate), the first dimension being larger than the second dimension, i.e. the compliant plates have a width in the axial direction much larger than the thickness thereof For example, the axial dimension is at least 10 times the tangential dimension. The narrow cross section of the compliant plate provides flexural deformability in the tangential direction and stiffness in the axial direction.

Compliant plates-sealing arrangements are known per se. Their application in turbines is known. However, compliant plate members have not been envisaged for turbo-pumps. Compliant plate sealing members are characterized by a total leakage flow, which is the combination of the leakage between the tip ends of the compliant plate members and the rotary component and of the leakage between adjacent compliant plate members. The first contribution is proportional to the sealing diameter and the second contribution is proportional to the seal height and shaft diameter. In turbo-pump sealing arrangements the ratio between the seal height and the sealing diameter is 4-5 times greater than in turbines. Compliant plate sealing arrangements in pumps would therefore result in unacceptable leakage flows. It has now been surprisingly discovered that the combination of compliant plate sealing arrangements and low specific speed stages results in a surprisingly improved sealing efficiency, resulting in higher pump efficiency. Alternatively, for a given total differential head, the same efficiency as in known pumps, can be achieved with a reduced number of stages.

Particularly advantageous arrangements provide for a labyrinth seal, comprising compliant plate members with one or more slits extending from the radially outmost root end towards an intermediate location along the plate height. One or more stationary rings, constrained to the stationary part of the sealing arrangement extend radially inwardly in the slits of the compliant plate members forming a labyrinth, which increases efficiency of the sealing arrangement.

Features and embodiments are disclosed here below and are further set forth in the appended claims, which form an integral part of the present description. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention, the scope of which is defined by the appended claims.

BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:

Fig. 1 illustrates a schematic section of a multi-stage, low specific speed pump;
Fig.2 illustrates an enlargement of one stage of the pump of Fig.1;

Fig.3 illustrates a sectional view of one compliant plate seal; and
Fig.4 illustrates a schematic view of a compliant plate sealing arrangement.

DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

The following description and the enclosed drawings specifically relate to an exemplary embodiment of a so-called between-bearings pump with a back-to-back arrangement. Use of features of the present disclosure, however, is not limited to this kind of pumps. These features can be easily extended for instance to multistage pumps with inline rotor configuration and a balance drum. Some of the advantages of the subject matter disclosed herein can be achieved also in a single-stage centrifugal pump, i.e. a pump having a single impeller. This type of pump is however not within the scope of the present invention.

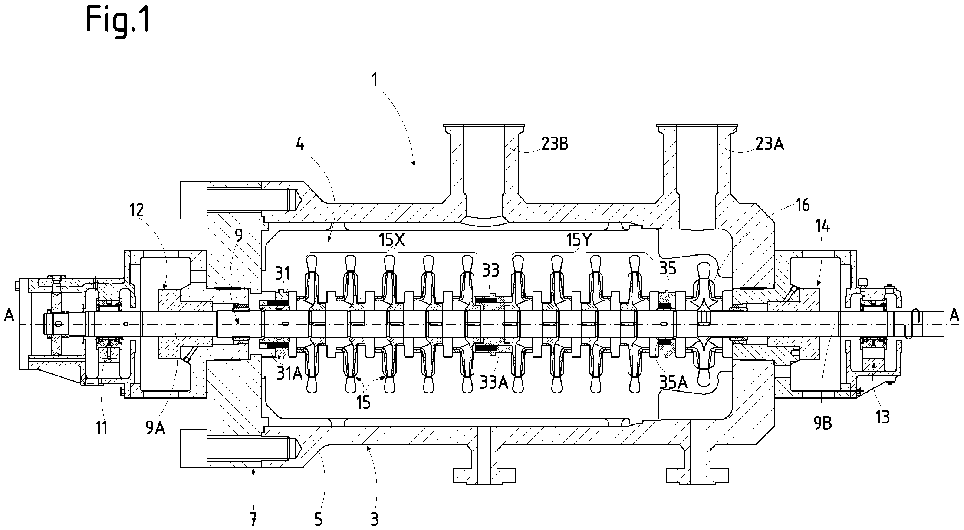

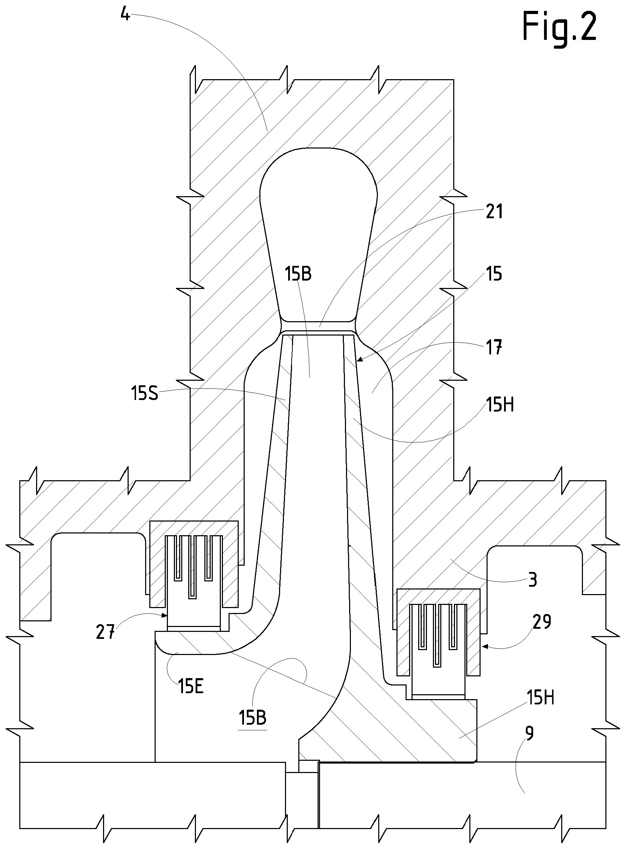

Fig.1 illustrates a longitudinal section according to a vertical plane of a multi-stage centrifugal pump 1. The centrifugal pump 1 has a casing indicated generally at 3 and comprised of a barrel 5 and a cover 7. The casing 3 houses a driven shaft 9 supported by end bearings 11, 13. A plurality of impellers 15 are torsionally connected on shaft 9 and rotate therewith. Each impeller 15 can be housed in a chamber 17 having an axial inlet and a radial outlet 21 (see in particular Fig.2). In a manner known per se the chambers 17 are connected in series. Each impeller 15 and respective chamber 17 form one pump stage.

In the exemplary embodiment illustrated in Fig. 1, the centrifugal pump 1 is a so-called back-to-back pump, with a suction manifold 23A and a delivery or discharge manifold 23B. The impellers 15 are divided in two series of oppositely arranged impellers, labeled 15X and 15Y respectively, arranged in a back-to-back configuration. The inlet flow through suction manifold 23A is processed sequentially in a first, inlet impeller 16, in the first series of impellers 15X, subsequently in the second series of impellers 15Y and is finally delivered through the discharge manifold 23B. Fluid channeling connecting the two sets of impellers is provided between the outer barrel 5 and an inner casing portion 4, wherein the chambers 17 are formed. The inner casing portion 4 can be formed by two halves connected to one another along a plane parallel to the section of Fig.1.

In the exemplary embodiment illustrated in Figs. 1 and 2, each impeller 15 comprises an impeller hub 15H and an impeller shroud 15S, between which a plurality of blades 15B are arranged. For each stage, an inlet side sealing member and an outlet side sealing member can be provided. More specifically, between the impeller shroud 15S and the casing an inter-stage sealing ring 27 is arranged at the inlet side of the stage and forms an inlet-side sealing member of the pump stage. The inter-stage sealing ring 27 is arranged between a stationary portion of the pump casing and an impeller eye 15E formed by the impeller shroud 15S and co-acts with said impeller eye 15E. Similarly, an inter-stage sealing bushing 29 is arranged at the outlet side of the stage, between the casing 3 and the hub 15H of the impeller 15. The sealing bushing 29 forms an outlet-side sealing member of the pump stage.

The sealing rings and sealing bushings, here also cumulatively designated "sealing members", prevent pressurized liquid exiting the impeller from returning towards the inlet of the stage, as well as liquid at the inlet of the subsequent stage to enter the previous stage from the back of the impeller 15.

In some embodiments, further sealing arrangements are provided in various axial positions along the shaft 9 of the centrifugal pump 1. In Fig.1 radial shaft-sealing members are shown at 31 and 35, near the bearings 11, 13 of the shaft 9. A further intermediate radial shaft-sealing member 33 can be arranged in an intermediate position of the shaft 9, between the shaft and the stationary casing 3, separating the two sets of back-to-back arranged impellers 15X and 15Y.

More specifically, the shaft-sealing member 31 is arranged between a shaft terminal portion 9A and the outermost impeller of impeller group 15X. The shaft-sealing member 35 is arranged between the opposite shaft terminal portion 9B and the outermost impeller of the impeller group 15Y. An auxiliary pump stage with a dual impeller 16 can be provided between the shaft-sealing member 35 and the shaft terminal portion 9B. The shaft terminal portions 9A, 9B are supported in the end bearings 11, 13, respectively. Outer mechanical sealing members 12 and 14 can further be provided between each bearing 11, 13 and the shaft-sealing members 31 and 33, respectively.

According to the invention, at least one pump stage comprises an inlet-side sealing member 27 and an outlet-side sealing member 29, which both are designed as an arrangement of compliant plate members attached in facing relation at root ends to a respective stationary component and forming a sealing ring between said stationary component and the respective rotary component. In some embodiments, only one, some or all the shaft-sealing members 31, 33, 35, arranged on the rotary shaft 9 are designed as compliant plate sealing arrangements. In yet further embodiments all the sealing members 27, 29, 31, 33 and 35 are designed as compliant plate sealing members.

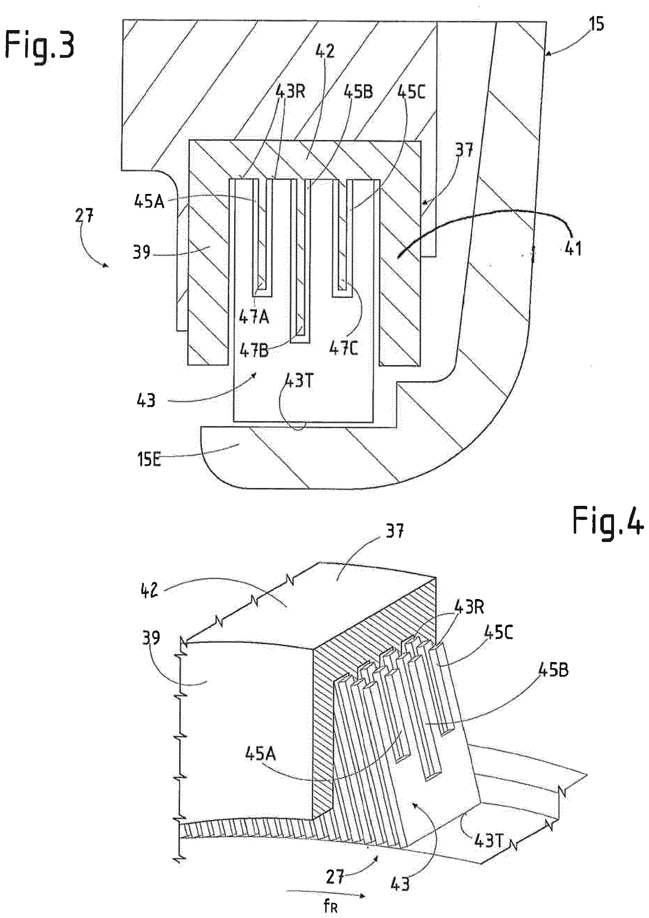

Figs 3 and 4 illustrate a longitudinal section along a plane containing the rotation axis of the centrifugal pump 1 and a perspective view of an exemplary arrangement of compliant plate members forming a sealing member. By way of example only, Figs. 3 and 4 illustrate one of the sealing rings 27 provided around the impeller eye of the impellers 15.

In the exemplary embodiment illustrated in Figs 3 and 4 the sealing member 27 comprises a housing 37, which is stationarily connected to the pump casing 3. In some embodiments the housing 37 can be comprised of a back ring 39 and a front ring 41. In other embodiments, not shown, the back ring 39 and/or the front ring 41 can be omitted. In the schematic representation of Figs. 3 and 4 the front ring 41 and the back ring 39 are formed as an integral part of the housing 37. In other embodiments, e.g. the front ring can be machined in the casing 3. Between the back ring and the front ring an intermediate annular wall 42 is provided. The housing 37 forms a stationary component of the sealing arrangement.

In the housing 37 compliant plate members 43 are arranged. As best shown in Fig. 4, each compliant plate member 43 has a root end or root 43R and a tip end or tip 43T, the root end 43R being the radially outmost edge of the compliant plate member and the tip being the radially innermost edge of the compliant plate member. The compliant plate members 43 are secured at their root ends 43R to the housing 37. In the exemplary embodiment shown in Fig.4 the root ends of the compliant plate members 43 are secured to the intermediate annular wall 42. The compliant plate members 43 extend radially inwardly towards the rotation axis A-A of the shaft 9 and their tip ends 43T are arranged near or in contact with the respective rotary component, in the example illustrated in Figs 3 and 4 the impeller eye 15E of the respective impeller 15. The compliant plate members 43 are arranged in faced relationship, i.e. face-to-face, and inclined with respect to the radial direction, to allow rotation of the shaft 9 in the rotary direction fR (Fig.4).

Those skilled in the art will understand that a similar arrangement of compliant plate members can be used also for the sealing member 29 and/or for the intermediate and end sealing arrangements 31, 33, 35. The sealing members 31, 33 and 35 can comprise compliant plate members having radially inwardly oriented edges co-acting directly with the outer surface of the shaft 9. In other embodiments, as shown in Fig.1, the sealing members 31, 33, 35 are comprised of bushings 31A, 33A, 35A, which are keyed on the shaft 9 and rotate therewith. The compliant plate members co-act with the outer cylindrical surface of the bushings 31A, 33A, 35A.

In some embodiments, each compliant plate member has a generally laminar shape. Each compliant plate member can have a substantially rectangular cross section, with a dimension in the axial direction, which is much larger than the dimension in the tangential direction. The compliant plate members are therefore axially stiff, but have a bending flexibility in the tangential direction.

In some embodiments, each compliant plate member 43 comprises at least one slit extending from the root end 43R of the compliant plate member 43 to an intermediate position along the radial extension of the compliant plate member. In the exemplary embodiment illustrated in Figs 3 and 4, each compliant plate member 43 comprises three slits 45A, 45B, 45C. The slits are preferably rectilinear and extend in a radial direction. In the exemplary embodiment the central slit 45B is longer than the side slits 45A, 45C. The compliant plate members 43 are arranged such that the slits 45A, 45B, 45C are aligned. This arrangement forms three annular slots extending around the sealing arrangement formed by the compliant plate members 43. Corresponding rings 47A, 47B, 47C secured to the housing 37 extend radially into the respective slots formed by the aligned slits 45A, 45B, 45C of the compliant plate members. In the exemplary embodiment shown in Fig.4, the rings 47A, 47B and 47C extend from the intermediate annular wall 42 of the housing 37.

As shown by way of example in the attached drawings, the rings 47A, 47B and 47C as well as the annular slots formed by the slits 45A, 45B, 45C in the facing compliant plate members 43 can have variable radial lengths. They can also have a variable axial width. While in the embodiment illustrated in Figs 3 and 4 three slits 45A, 45B, 45C are provided in each compliant plate member 43, a different number of slits and correspondingly a different number of rings 47A, 47B, 47C can be provided, based e.g. on design considerations. In other, less advantageous embodiments, no rings and no slots are provided. The compliant plate members will in that case be solid rather than slotted as depicted in the figures. This simplified embodiment, however, provides a less efficient sealing effect, as will be clarified later on.

The shape of the slits and the cross sectional shape of the rings can be rectangular, as shown in the exemplary embodiment, but other shapes can be used instead. For example the slits and the annular rings can have a V-shaped or a U-shaped cross section.

Additionally, also the outer perimeter of the compliant plate members 43 can be rectangular, as illustrated, or differently shaped, e.g. T-shaped, trapezoidal or the like, e.g. with increasing width from the root end to the tip, or vice-versa.

The narrow cross section of each compliant plate member 43 provides axial stiffness and bending flexibility in the tangential direction, as noted above. The sealing member formed by the annularly arranged compliant plate members 43 provides an efficient sealing functionality also in case of large pressure differences between the back and front sides of the sealing member, i.e. in case of large head values, thanks to the axial stiffness provided by the substantially planar shape of the compliant plate members 43. Thanks to the stiffness of the compliant plate members 43 in the axial direction, even in case of high differential head across the pump stage, the deformation of the sealing arrangement in the axial direction will be negligible, thereby preserving the sealing functionality.

The combination of the one or more radial rings 47A, 47B, 47C and circumferential slots formed by the slits 45A, 45B, 45C of the compliant plate members 43 provide a labyrinth sealing effect, imposing a tortuous path to the leakage flow from the pressure side to the suction side of the sealing member, thereby increasing the resistance to leakage flow.

This particularly efficient sealing arrangement results in an increased efficiency of centrifugal pumps characterized by a low specific speed. The specific speed of a stage of a centrifugal pump can be defined as

$$ Ns = \omega \ q^{1/2} \ / \ h^{3/4} $$

where

Ns = specific speed

$\omega$ = pump shaft rotational speed (rpm)

q = flow rate ($m^3/h$, l/s, l/min, $m^3/min$, US gpm, British gpm) at Best Efficiency Point (BEP)

h = head rise (m, ft)

Depending upon the units used (International System of Units (SI) or US units), as understood herein a low specific speed centrifugal pump stage is one where the specific speed is

Ns < 25 (in the SI system)

Ns < 1290 in the US system.

A multistage centrifugal pump usually has a plurality of stages with identical impellers. Thus, the multistage pump having a low specific speed is one where all the stages have a low specific speed. In some embodiments, the first stage of the multistage centrifugal pump has an impeller, which differs from the remaining impellers of the centrifugal pump and which can have a higher specific speed.

The use of compliant plate members in centrifugal pumps, especially multi-stage centrifugal pumps, allows reducing the number of stages and therefore the number of impellers, increasing the head, i.e. the pressure difference, across each stage, maintaining a high overall pump efficiency, due to the sealing functionality of the compliant plate sealing members.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims.

Hence, the proper scope of the disclosed innovations should be determined only by the appended claims.

## Claims

1. A centrifugal pump comprising:

   a casing (3);
   a rotary shaft (9) arranged for rotation in said casing; a plurality of pump stages, each comprising an impeller (15) secured on said rotary shaft (9) and arranged for rotation in a respective impeller chamber (17) formed in said casing (3); a plurality of sealing members (27, 29, 31, 33, 35), each arranged for reducing leakage between a rotary component and a respective stationary component in said centrifugal pump; wherein at least one pump stage comprises an inlet-side sealing member (27) arranged and configured for co-action with an impeller eye (15E) and an outlet-side sealing member (29) arranged and configured for co-action with an impeller hub (15H) , each sealing member comprising an arrangement of compliant plate members (43) attached in facing relation at root ends to the respective stationary component and forming a sealing ring between said stationary component and the respective rotary component; wherein the at least one pump stage is configured to have a specific speed defined as

   $$ Ns = (\omega \ q^{1/2})/(h^{3/4}) $$

   equal to or less than 25, where
   $\omega$ is a pump shaft rotational speed expressed in rpm
   q is a flow rate across the stage, expressed in m3/s at Best Efficiency Point (BEP)
   h is a head rise across the stage expressed in m.

**2.** The centrifugal pump of claim 1, comprising N stages, wherein (N-m) stages are configured to have a specific speed Ns equal to or less than 25.

**3.** The centrifugal pump of claim 2, wherein m = 1.

**4.** The centrifugal pump of any of claims 2 to 3, wherein all stages are configured to have a specific speed equal to or less than 25.

**5.** The centrifugal pump of any one of the preceding claims, wherein each pump stage comprises an inlet-side sealing member.

**6.** The centrifugal pump of claim 5, wherein each inlet-side sealing member of said plurality of pump stages comprises an arrangement of compliant plate members.

**7.** The centrifugal pump of claim 5 or 6, wherein each inlet-side sealing member comprising an arrangement of compliant plate members is arranged and configured for co-action with an impeller eye of the respective impeller (15).

**8.** The centrifugal pump of any one of the preceding claims, wherein each pump stage comprises an outlet-side sealing member comprising an arrangement of compliant plate members.

**9.** The centrifugal pump of any one of the preceding claims, comprising at least one shaft-sealing member between a stationary component and said shaft or a bushing mounted on said shaft, wherein said at least one shaft-sealing member is comprised of an arrangement of compliant plate members attached in facing relation at root ends to said stationary component and forming a sealing ring between said stationary component and said rotary shaft or said bushing mounted on said rotary shaft.

**10.** The centrifugal pump of any one of the preceding claims, wherein each said compliant plate member of at least one of said sealing members comprises at least one slit extending radially into the compliant plate member from a radially outermost root end of the compliant plate member to a radially intermediate location, between said root end and a radially innermost tip end of the compliant plate member, the slits of said compliant plate members being aligned to form an annular slot; and wherein at least one stationary ring attached to said stationary component extends radially into said annular slot formed by the compliant plate members.

**11.** The centrifugal pump of any one of the preceding claims, wherein each said compliant plate member of at least one of said sealing members comprises a plurality of slits extending radially into the compliant plate member from a radially outermost root end of the compliant plate member to a radially intermediate location, between said root end and a radially innermost tip end of the compliant plate member, the slits of said compliant plate members being aligned to form an annular slot; and wherein a plurality of stationary rings attached to said stationary component extend radially into said annular slots formed by the compliant plate members.

**Patentansprüche**

**1.** Kreiselpumpe, umfassend:

ein Gehäuse (3);
eine Drehwelle (9), die zur Drehung in dem Gehäuse angeordnet ist; eine Vielzahl von Pumpenstufen, die jeweils ein Laufrad (15) umfassen, das an der Drehwelle (9) befestigt und zur Drehung in einer jeweiligen in dem Gehäuse (3) gebildeten Laufradkammer (17) angeordnet ist; eine Vielzahl von Dichtungselementen (27, 29, 31, 33, 35), die zum Verringern von Leckage jeweils zwischen einem rotierenden Bauteil und einem jeweiligen stationären Bauteil in der Kreiselpumpe angeordnet sind;
wobei mindestens eine Pumpenstufe ein zum Zusammenwirken mit einem Laufradauge (15E) angeordnetes und konfiguriertes einlassseitiges Dichtungselement (27) und ein zum Zusammenwirken mit einer Laufradnabe (15H) angeordnetes und konfiguriertes auslassseitiges Dichtungselement (29) umfasst, wobei jedes Dichtungselement eine Anordnung von biegsamen Plattenelementen (43) umfasst, die an den jeweiligen stationären Bauteilen in zugewandter Beziehung an Wurzelenden befestigt sind und zwischen dem stationären Bauteil und dem jeweiligen rotierendem Bauteil einen Dichtungsring bilden; wobei die mindestens eine Pumpenstufe konfiguriert ist, um eine spezifische Drehzahl, die als

$$Ns = (\omega\ q^{1/2})/(h^{3/4})$$

definiert ist, gleich oder kleiner als 25 aufzuweisen, wobei
$\omega$ eine in U/min ausgedrückte Pumpenwellendrehzahl ist,
q eine in m3/s ausgedrückte Strömungsgeschwindigkeit über die Stufe hinweg beim Punkt des besten Wirkungsgrads (BEP) ist,
h ein in m ausgedrückter Anstieg der Druckhöhe über die Stufe hinweg ist.

**2.** Kreiselpumpe nach Anspruch 1, umfassend N Stufen, wobei (N-m) Stufen so konfiguriert sind, dass sie eine spezifische Drehzahl gleich oder kleiner als 25 aufweisen.

**3.** Kreiselpumpe nach Anspruch 2, wobei m = 1 ist.

**4.** Kreiselpumpe nach einem der Ansprüche 2 bis 3, wobei alle Stufen so konfiguriert sind, dass sie eine spezifische Drehzahl gleich oder kleiner als 25 aufweisen.

**5.** Kreiselpumpe nach einem der vorangehenden Ansprüche, wobei jede Pumpenstufe ein einlassseitiges Dichtungselement umfasst.

**6.** Kreiselpumpe nach Anspruch 5, wobei jedes einlassseitige Dichtungselement der Vielzahl von Pumpenstufen eine Anordnung von biegsamen Plattenelementen umfasst.

**7.** Kreiselpumpe nach Anspruch 5 oder 6, wobei jedes einlassseitige Dichtungselement, das eine Anordnung von biegsamen Plattenelementen umfasst, zum Zusammenwirken mit einem Laufradauge des jeweiligen Laufrads (15) angeordnet und konfiguriert ist.

**8.** Kreiselpumpe nach einem der vorstehenden Ansprüche, wobei jede Pumpenstufe ein auslassseitiges Dichtungselement umfasst, das eine Anordnung von biegsamen Plattenelementen umfasst.

**9.** Kreiselpumpe nach einem der vorstehenden Ansprüche, umfassend mindestens ein Wellendichtungselement zwischen einem stationären Bauteil und der Welle oder einem an der Welle montierten Gleitlager, wobei das mindestens eine Wellendichtungselement aus einer Anordnung von biegsamen Plattenelementen besteht, die an dem stationären Bauteil in zugewandter Beziehung an Wurzelenden befestigt sind und zwischen dem stationären Bauteil und der Drehwelle oder dem an der Drehwelle montierten Gleitlager einen Dichtungsring bilden.

**10.** Kreiselpumpe nach einem der vorstehenden Ansprüche, wobei jedes biegsame Plattenelement mindestens eines der Dichtungselemente mindestens einen Schlitz umfasst, der sich von einem radial äußersten Wurzelende des biegsamen Plattenelements zu einer radial zwischen dem Wurzelende und einem radial innersten Spitzenende des biegsamen Plattenelements liegenden Zwischenstelle radial in das biegsame Plattenelement erstreckt, wobei die Schlitze der biegsamen Plattenelemente so ausgerichtet sind, dass sie einen ringförmigen Schlitz bilden; und wobei sich mindestens ein stationärer Ring, der an dem stationären Bauteil befestigt ist, radial in den ringförmigen Schlitz erstreckt, der durch die biegsamen Plattenelemente gebildet wird.

**11.** Kreiselpumpe nach einem der vorstehenden Ansprüche, wobei jedes biegsame Plattenelement mindestens eines der Dichtungselemente eine Vielzahl von Schlitzen umfasst, die sich von einem radial äußersten Wurzelende des biegsamen Plattenelements zu einer radial zwischen dem Wurzelende und einem radial innersten Spitzenende des biegsamen Plattenelements liegenden Zwischenstelle radial in das biegsame Plattenelement erstrecken, wobei die Schlitze der biegsamen Plattenelemente so ausgerichtet sind, dass sie einen ringförmigen Schlitz bilden; und wobei sich eine Vielzahl von stationären Ringen, die an dem stationären Bauteil befestigt sind, radial in die ringförmigen Schlitze erstrecken, die durch die biegsamen Plattenelemente gebildet werden.

**Revendications**

**1.** Pompe centrifuge comprenant :

un boîtier (3) ;
un arbre rotatif (9) agencé pour tourner dans ledit boîtier ; une pluralité d'étages de pompe, chacun comprenant un impulseur (15) fixé sur ledit arbre rotatif (9) et agencé pour tourner dans une chambre d'impulseur (17) respective formée dans ledit boîtier (3) ;
une pluralité d'éléments d'étanchéité (27, 29, 31, 33, 35), chacun agencé pour réduire une fuite entre un composant rotatif et un composant stationnaire respectif dans ladite pompe centrifuge ;
dans laquelle au moins un étage de pompe comprend un élément d'étanchéité côté entrée (27) agencé et configuré pour coopérer avec un œillard d'impulseur (15E) et un élément d'étanchéité côté sortie (29) agencé et configuré pour coopérer avec un moyeu d'impulseur (15H), chaque élément d'étanchéité comprenant un agencement d'éléments de plaque souples (43) attachés en relation faisant face au niveau d'extrémités de racine au composant stationnaire respectif et formant un anneau d'étanchéité entre ledit composant stationnaire et le composant rotatif respectif ; dans laquelle l'au moins un étage de pompe est configuré pour avoir une vitesse spécifique définie comme

$$Ns = (\omega\ q^{1/2})/(h^{3/4})$$

égale ou inférieure à 25, où
ω est une vitesse de rotation d'arbre de pompe exprimée en tr/min

q est un taux d'écoulement à travers l'étage, exprimé en m3/s au niveau du point de rendement maximal (BEP)

h est une élévation de tête à travers l'étage exprimée en m.

2. Pompe centrifuge selon la revendication 1, comprenant N étages, dans laquelle (N-m) étages sont configurés pour avoir une vitesse spécifique Ns égale ou inférieure à 25.

3. Pompe centrifuge selon la revendication 2, dans laquelle m = 1.

4. Pompe centrifuge selon l'une quelconque des revendications 2 à 3, dans laquelle tous les étages sont configurés pour avoir une vitesse spécifique égale ou inférieure à 25.

5. Pompe centrifuge selon l'une quelconque des revendications précédentes, dans laquelle chaque étage de pompe comprend un élément d'étanchéité côté entrée.

6. Pompe centrifuge selon la revendication 5, dans laquelle chaque élément d'étanchéité côté entrée de ladite pluralité d'étages de pompe comprend un agencement d'éléments de plaque souples.

7. Pompe centrifuge selon la revendication 5 ou 6, dans laquelle chaque élément d'étanchéité côté entrée comprenant un agencement d'éléments de plaque souples est agencé et configuré pour coopérer avec un œillard d'impulseur de l'impulseur (15) respectif.

8. Pompe centrifuge selon l'une quelconque des revendications précédentes, dans laquelle chaque étage de pompe comprend un élément d'étanchéité côté sortie comprenant un agencement d'éléments de plaque souples.

9. Pompe centrifuge selon l'une quelconque des revendications précédentes, comprenant au moins un élément d'étanchéité d'arbre entre un composant stationnaire et ledit arbre ou une bague montée sur ledit arbre, dans laquelle ledit au moins un élément d'étanchéité d'arbre comprend un agencement d'éléments de plaque souples attachés en relation faisant face au niveau d'extrémités de racine audit composant stationnaire et formant un anneau d'étanchéité entre ledit composant stationnaire et ledit arbre rotatif ou ladite bague montée sur ledit arbre rotatif.

10. Pompe centrifuge selon l'une quelconque des revendications précédentes, dans laquelle chaque dit élément de plaque souple d'au moins l'un desdits éléments d'étanchéité comprend au moins une rainure s'étendant radialement à l'intérieur de l'élément de plaque souple à partir d'une extrémité de racine radialement la plus externe de l'élément de plaque souple jusqu'à un emplacement radialement intermédiaire, entre ladite extrémité de racine et une extrémité de pointe radialement la plus interne de l'élément de plaque souple, les rainures desdits éléments de plaque souples étant alignées pour former une fente annulaire ; et dans laquelle au moins un anneau stationnaire attaché audit composant stationnaire s'étend radialement à l'intérieur de ladite fente annulaire formée par les éléments de plaque souples.

11. Pompe centrifuge selon l'une quelconque des revendications précédentes, dans laquelle chaque dit élément de plaque souple d'au moins l'un desdits éléments d'étanchéité comprend une pluralité de rainures s'étendant radialement à l'intérieur de l'élément de plaque souple à partir d'une extrémité de racine radialement la plus externe de l'élément de plaque souple jusqu'à un emplacement radialement intermédiaire, entre ladite extrémité de racine et une extrémité de pointe radialement la plus interne de l'élément de plaque souple, les rainures desdits éléments de plaque souples étant alignées pour former une fente annulaire ; et dans laquelle une pluralité d'anneaux stationnaires attachés audit composant stationnaire s'étendent radialement à l'intérieur desdites fentes annulaires formées par les éléments de plaque souples.

# Fig.1

Fig.2

Fig.3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003021096 A
- US 20080272553 A1
- US 20110135454 A1
- DE 102006028806 A1
- DE 9001229 U